# EUROPEAN PATENT APPLICATION

(11) **EP 1 894 474 A1**
(43) Date of publication of application: **05.03.2008**
(21) Application number: 06119773.7
(22) Date of filing: 30.08.2006
(51) Int. Cl.: A23G 1/38, A23G 1/56, A23D 7/00, A23G 1/32, A23G 1/36, A23G 1/40

(54) **Reduced calorie cocoa butter composition and preparation and use thereof**

(71) Applicant: NV. Nutrilab SA, 3461 Bekkevoort (BE)
(72) Inventor: Vastenavond, Christian Manuel, B-3270, Scherpenheuvel-Zichem (BE)
(74) Representative: van Westenbrugge, Andries

(57) **Abstract**

The invention pertains to a reduced calorie cocoa butter composition, being a w/o emulsion containing an aqueous dispersion of solidified droplets containing a hydrophilic colloidal stabilizer in a continuous phase containing cocoa butter. The invention further pertains to a process for making the same, by (i) providing cocoa butter at a temperature above its softening point, (ii) adding thereto, using encapsulation, an aqueous composition containing a hydrophilic colloidal stabilizer at a temperature of at least the softening temperature of the cocoa butter or the gelling temperature of the hydrophilic colloidal stabilizer, whichever is higher, to obtain a w/o emulsion in which the continuous phase contains cocoa butter, and (iii) solidifying the dispersed aqueous phase therein.

## Description

### TECHNICAL FIELD OF THE INVENTION

The invention pertains to a reduced calorie cocoa butter composition, to the preparation thereof, and to the use thereof in chocolate manufacture.

### BACKGROUND OF THE INVENTION

Consumer awareness of the caloric content of food has increased very much over the past few years and has brought about a demand for foods having a reduced fat content. This demand has created a need in the food industry to replace at least a portion of the fat and/or oil in prepared foodstuffs. Since then, a lot of products have been commercialized in which the fats have been replaced at least partially by other low-caloric compounds such as proteins, gelatins, hydrolyzed or modified starches, maltodextrins etc. as disclosed in EP-A-237.120 ,WO-A-93/17565 and WO-A-96/03057.

The desire for fat replacers in foods has also reached the chocolate manufacture industry, where the high caloric value of cocoa butter is of great concern. For instance, US 4,822,875 describes certain sucrose fatty acid esters, and US 5,387,429 discloses esterified propoxylated glycerin compositions, both reportedly useful cocoa butter substitutes, closely mimicking the desirable melting properties of cocoa butter: cocoa butter is solid at about 18°C and fully liquid at 36°C.

However, despite these kind of attempts up until now it has proven to be extremely difficult to replace high caloric cocoa butter in chocolate, without deteriorating the otherwise excellent non-waxy mouthfeel and consistency cocoa butter provides to the chocolate product. The uniqueness of cocoa butter is attributable to the particular combination and positional distribution of fatty acid acyl groups on the three carbons of glycerol. Cocoa butter contains approximately equimolar proportions of three major fatty acid acyl groups (palmitate, stearate, oleate), but only three major molecular species despite the possibility of many additional combinations of the dominant fatty acids. Simple replacement of (part of) the cocoa butter by adding in these fat replacers does not compensate for these special cocoa-related features, especially not in terms of its retraction and crystallization properties.

In addition, US-A-2006/128815 teaches a membrane emulsification method for preparing mixtures of immiscible fluids, such as oil and water, whereby each can serve as the dispersed or continuous fluid. However, it is preferred that the continuous phase is water, and it may be applied in food products such as sauces, fresh cheese, mayonnaise, spreadable products and dressings. Membrane emulsification is based on the use of a microporous membrane to prepare monodisperse emulsions with droplets of pre-determined size. However, membrane emulsification and other encapsulation techniques may have been associated with food applications, mostly for preserving stability, but never in relation to reducing the caloric content of foods, let alone in chocolate manufacture.

Hence, there is a need in the art for low caloric chocolate food product having a visual appearance and taste perception, especially in terms of melting behaviour, non-waxy mouthfeel and consistency, indifferent from its traditional calorie-rich counterpart. For that purpose, there is a demand for partial cocoa butter replacement which could realise these effects, thus resulting in a low calorie cocoa butter-containing chocolate food product.

### DESCRIPTION OF THE INVENTION

It is an object of the invention to provide a low-caloric cocoa butter composition suitable for replacing at least part of the cocoa butter normally present in chocolate, without affecting the organoleptic properties of the chocolate confectionary in view of its calorie-rich counterpart. Therein, it is not considered sufficient to mimic cocoa butter melting behaviour; the replacement composition should also exhibit the capacity to retract during solidification and crystallisation as to allow suitable demoulding in the actual chocolate manufacture.

It is now found that this object can be achieved by encapsulating an aqueous dispersion in a continuum of cocoa butter, wherein the dispersed phase is solid-like, for instance achieved by gelling.

The invention thus pertains to a reduced calorie cocoa butter composition being a w/o emulsion containing an aqueous dispersion of solidified droplets in a continuous phase containing cocoa butter.

It is preferred to incorporate an emulsifier, such as polyglycerol polyricinileate (PGPR), which forms a membrane, encapsulating the gelled water particle.

The invention is not particularly limited to a source of cocoa butter. "Cocoa butter" in the context of the invention also comprises cocoa butter substituents known in the art. However, in a preferred embodiment the continuous phase contains at least 75 vol%, in particular at least 90 vol% of cocoa butter. In addition to the aforementioned physical characteristics, the softening temperature of the cocoa butter is between 30 - 32 °C, dependent on the actual source. In the context of the invention, the terms "fat" and "oil" are used interchangeably.

It is preferred that the water droplets further contain fat-mimicking carbohydrates. It is believed that the water-soluble carbohydrate fat mimics interact with the water to replace some of the functionality of the cocoa butter. The water provides the smooth body and mouthfeel of the fat. However, since water decreases shelf life and reduces emulsion stability, hydrophilic colloidal stabiliser gels are to be applied to solidify the aqueous phase. Hence, in the context of the invention with "solidified" is also understood "gelled" or otherwise physically immobilized. The incorporated water may still be available for microbes to grown and chemical reactions to take place, but the effect is localized, thus minimizing the effect on the chocolate confectionary using the reduced calorie cocoa butter composition of the invention.

Further, gelling prevents the water from reacting with starches present in the cocoa butter preparation, which would otherwise result in perceptable (and thus undesirable) hard "stone-like" pieces in the chocolate, and which would hinder conching, the long process of intense mixing, agitating and aerating of heated liquid chocolate.

To achieve solidification, gellable hydrophilic colloidal stabilizers may be used. The stabilizer may be any of those already described in the art, preferably selected from the group consisting of microcrystalline cellulose, carrageenan, guar gum, alginate, xanthan gum, methyl cellulose, carboxylmethyl cellulose, ethyl cellulose, dextrin, starches, gelatine, locust bean gum, soy protein isolate, pectin and the like. Roughly speaking, the stabilisers are ungelled at a temperature above 95°C, but solid-like at normal storage conditions.

Pectin has been found to be particularly effective. Pectin may be used as obtained from citrus peel, apple pomace, or other appropriate edible plant material. It is a carbohydrate product consisting mainly of galacturonic acid and galacturonic acid methyl ester units forming linear polysaccharide chains. In the art, pectins are roughly divided into three groups on the basis of their different gelling properties, distinguishing between high methoxy (HM), low methoxy (LM) and amidated pectins, either HM or LM.

HM pectins require a minimum amount of soluble solids (about 55%) and a low pH for gelation. They have a degree of esterification greater than 50%, and form thermally irreversible gels in the presence of sugars at pH less than 3.5. LM pectins have a degree of esterification less than 50%, and their gelling properties are not dependent on pH; thermally reversible gels are induced by calcium ions and function, and pH is less restrictive therein. Amidated pectins are pectins which have been de-esterified with ammonia instead of acids. During de-esterification, part of the ester groups has been replaced by amide groups, which modifies the gelling properties in comparison to acid de-esterified pectins.

There are many commercial pectins available that provide the required gelling behavior, such as Slendid, commercially available from CP Kelco, and Unipectine (LSF series) from Degussa (Düsseldorf, Germany). The most preferred pectin in the context of the invention is a LM amidated pectin, since it is more pH tolerant and allows for favourably thermo-reversible gel formation. The pectin typically gels at a temperature lower than about 55 °C.

The amount of pectin is selected such that it can establish gelling of the aqueous phase. In practice 0.5 - 20 g per kg water may be used.

Optionally, fat replacers other than water and stabilizer are applied. It is found particularly useful to use fat-mimicking carbohydrates, especially fibers. Where fibers are used, microbial growth is inhibited. With "fat-mimicking" carbohydrates it is meant the fat-replacing carbohydrates existing in the art. These are preferably water-soluble. Non-limiting examples are cellulose, dextrins, fibers, gums (e.g. guar gum, Arabic gum, locust beam gum, xanthan gum, carrageenan), inulin, maltodextrin, oatrim, polydextrose, polyols, and starch or modified starch. Combinations may also be applied. The amount of fat-mimicking carbohydrates other than pectin is preferably between 1 - 500 g per kg water.

The fat-mimicking carbohydrates preferably contain some kind of a randomly bonded polymer of glucose, especially those recognized as fibers in the art. Short chain amylose in US 5,711,986 is an example thereof. High molecular weight polysaccharides supply the slippery mouthfeel of fat, while low molecular weight oligosaccharides are known to contribute to the sugar functionality. Polydextrose is the preferred choice as described in the Foods Chemicals Codex (FCC) Monograph as a randomly bonded (1,6-glycosidic linkage predominates) condensation polymer of D-glucose, sorbitol, and citric acid. The commercial product also contains small amounts of free glucose, sorbitol, citric acid, and 1,6-anhydro-D-glucose (levoglucosan). Polydextrose may be applied having a molecular weight ranging from 162 to 20,000, preferably having 90 % having a MW between 504 and 5,000. Preferably, the average degree of polymerization is 12, corresponding to an average molecular weight of approximately 2000. It is only partially metabolizable, providing 1 kcal/g.

Another preferred fat-mimicking carbohydrate is inulin, which is a natural, soluble dietary fiber extracted from e.g. chicory roots and is composed of linear chains of fructose molecules varying in length from 2-60 units. These chains are connected by beta(2-1) linkages and are often terminated by a glucose unit. Because of different levels of free sugars, inulin products have a variety of caloric contents, ranging from 1 to 1.5 kcal/g.

It is especially favourable to inulin and/or polydextrose as fat-mimicking carbohydrates, in particular both. It is observed that droplets are formed having a core dense in the above-mentioned fibers, captured by a shell layer rich in gelled pectin. If emulsifiers are used, these mostly contribute by forming a second shell layer on the outside of the droplet, thus controlling the distance among the droplets.

In order to obtain a stabilized w/o emulsion of an aqueous phase encapsulated in a continuous phase containing cocoa butter showing significant caloric reduction, it is found that the preferred volume ratio of the continuous phase (containing cocoa butter) to the aqueous dispersed phase is between 3:1 and 1:2, more preferably in the range of 2:1 1 to 1:1. Hence, a 50 % energy reduction may easily be obtained this way.

Best results are obtained if that the emulsion exhibits a substantially uniform droplet size distribution throughout. The dispersed droplet size and its distribution affect many of the physicochemical properties of the emulsion. For once, the size of the droplets is a determining factor for the stability of the emulsion. In addition, droplet size may affect the flavour of the product and also has great effect on growth of bacteria. If the dispersed droplet diameter is large, bacteria multiply readily; if the dispersed droplet diameter is small, bacterial growth may be suppressed due to lack of nutrients in the interior of droplets.

It is found that optimal results are obtained if the average droplet size is between 0.1 and 15 µm, preferably in the range of 1 - 10 µm. A "substantially uniform distribution" is understood to comprise a distribution of droplets of which the largest and the smallest diameters are no more than 5 µm remote from the average size. Most preferably, the w/o emulsion of the present invention is a monodisperse emulsion wherein at least 95 vol%, preferably at least 96 vol% dispersed droplets have a size within a range of 0.5 - 15 µm, most preferably 1 - 10 µm. To optimize microbial growth prevention, it is preferred that at least 95 vol% of the droplets has a size between 0.5 - 5 µm, in particular 1 - 3 µm.

Optionally art-known additives, such as emulsifiers, flavours, vitamins and colorants may be present in either phase. A particularly suitable emulsifier is a biodegradable hydrophobic emulsifier, such as polyglycerol polyricinoleate as disclosed in EP-A-559.013, EP-A-44.203 and WO-A-85/04346, which will be present in the continuous phase.

The energy content of the cocoa butter composition may be further reduced by replacing a part of the cocoa butter in the continuous phase, with partial fat replacers known in the art. It is preferred that the continuous phase contains up to 25 %, more preferably up to 10 vol% of fat replacers. For instance, a partial fat replacer, such as mixtures of palm mid fraction and 1,3-distearyl-2-oleyl glycerol (SOS) and/or 1-palmityl-2-oleyl-3-stearoyl glycerol (POS) as described in US 4,283,436 may be added to the continuous phase. Palm mid fraction is the product prepared by acetone fractionation as described and characterized in GB 827,172.

The invention further pertains to a process for preparing the above-described low-caloric cocoa butter composition by (i) providing cocoa butter at a temperature above its softening point, (ii) adding thereto, using encapsulation, an aqueous composition containing a hydrophilic colloidal stabilizer at a temperature of at least the softening temperature of the cocoa butter or the gelling temperature of the hydrophilic colloidal stabiliszr, whichever is higher, to obtain a w/o emulsion in which the continuous phase contains cocoa butter, and (iii) solidifying the dispersed aqueous phase therein.

While conventional emulsification methods rely on stirring utilizing high shear, coalescence of the dispersed phase may occur. Traditional stirring equipment, colloid mills, homogenizers, ultrasonics and microfluidizers do not achieve the aforementioned essential droplet size and size distribution, and often do not result in emulsion stability over normal processing times.

The addition of the aqueous phase to the cocoa butter should involve some kind of (micro)encapsulation technique instead, either mechanically (e.g. spray drying) or chemically (simple or complex coacervation). A. Madene et al. "Flavour encapsulation and controlled release - a review" Int. J. Food Sci. & Technology (2006) 41, 1 -21) provides an overview of the different available microencapsulation techniques which may be applied in food industry, mostly for preserving stability. Essentially, encapsulation is a widely used barrier technology, preventing ingredients from reacting prematurely with their environment or from degrading during processing or storage.

It is found that best results in terms of homogeneity are achieved if the stabilizer is completely dissolved in the aqueous composition prior to mixing. This is especially the case if pectin is applied as the hydrophilic colloidal stabilizer. It is preferred to first dissolve the stabiliser in water, and only upon complete dissolution add other solutes. It is preferred to apply high shear mixing to establish complete dissolution of the stabiliser and other components.

The aqueous composition and the cocoa butter are mixed together at a volume ratio of preferably 3:1 and 1:2, more preferably in the range of 2:1 to 1:1.

The pH of the aqueous composition is preferably maintained at 5 - 6, more preferably 5 - 5.7 to provide effective microbial control and good flavour with the lowest necessary levels of preservatives in the ultimate product. It is preferred to add antimicrobials such as sodium sorbate, potassium sorbate and/or phosphoric acid to the aqueous composition. Propylgallate may be added as antioxidant to prevent fat mimic oxidative deterioration.

Of all available encapsulation methods, membrane emulsification such as taught in US-A-2006/128815 or GB-A-2,385,008 is found particularly suitable, since it enables the formation of monodisperse emulsions with droplets of pre-determined size. Modifications will readily occur to those skilled in the art.

Using membrane emulsification, the aqueous phase is emulsified under pressure, typically from 1 to 6 bar, depending on the pore size, into the continuous cocoa butter-containing phase by passing it through a microporous membrane having a narrow pore size distribution. While emulsifying, the temperature is controlled such that either phase is suitably liquid.

The drop size and distribution are controlled by the pore size of the membrane. For the purpose of the invention, it is found particularly useful to use a microporous metal membrane, preferably having a mean pore size between 0.05 and 0.5 µm. By "microporous metal membrane" is meant any metallic layer (including "supported layer articles") having micropores and sufficient structural integrity to withstand the pressure needed to enter the emulsion as drops into the continuous fat phase, as for instance disclosed in GB-A-2,385,008. According to GB-A-2,385,008, metal microfilters have a pore size and pore size distribution which is much more defined than for commercially available microfilter membranes made from polymers or alumina (or other ceramic materials). In addition, these other source microfilters are often only available for use at laboratory scale due, in part, to the small areas available. Ceramic filters are also extremely fragile.

Prewetting of the membrane surface with the dispersed phase should be avoided, since deposition of the aqueous phase on the membrane leads to a reduction in flow rate and clogging. This is prevented by pretreating (prewetting) the micropore membrane with the oily phase instead, preferably by immersing or soaking the microporous membrane in the oil phase sufficiently to render the membrane hydrophobic.

Prior or during mixing at high temperature, optionally fat-soluble ingredients such as emulsifiers, vitamins, additional fat replacers, flavorants and colorants may be added to the cocoa butter-containing phase, provided that the oily phase is in fluidic state.

Once the w/o emulsion is formed, solidification or gelation of the stabilizer is established, e.g. by cooling, or, for (amidated) LM pectins, by adding calcium ions. The gelation makes it a true encapsulation method, thereby minimizing the aforementioned drawbacks of the added water on the overall product.

The invention further pertains to the use of the aforedescribed membrane emulsification for the manufacture of reduced calorie cocoa butter compositions, and to the manufacture of chocolate food applications, such as chocolate confectionary made therefrom. Chocolate food products, especially chocolate confectionary may be prepared according to the invention by replacing conventional high-caloric cocoa butter with the cocoa butter composition of the invention. Although the term "chocolate" is in some countries only used for products fulfilling certain requirements, in the specification it is intended to cover all solid, edible fat products based on cocoa, i.e. cocoa powder or cocoa liquor, whether or not the fat is partly cocoa butter.

The replacement ratio may be 1:1. With the present reduced calorie cocoa butter composition it is possible to replace at least 50 %, more preferably at least 75 %, most preferably at least 90 %, in particular all of its high caloric counterpart in the chocolate food application, without affecting the organoleptic and physical properties traditionally associated with cocoa butter.

### Example 1

**1) pectin solution (Solution A)**:In a 2 liter beaker with suspended magnetic stirrer a mass of 0.494 liter distilled water was placed and heated up to 80°C. The inner bar could rotate freely from the supports and it was stirred at a rate sufficient to provide an air vortex.
   A mass of 6 g pectin (Geni LM-104AS from CP KELCO) was very slowly added to the stirred water. To cool the solution it was left stirring with the heater turned off. The stock pectin was left overnight for swelling.
**2) Gum, sugar, and calcium solution (Solution B):** A mass of 59.5g water was put into a beaker and a magnetic stirrer added. The water was heated up no more than 80°C A mass of 0.4g Gum Arabic (ACROS 258852500) was added slowly whilst stirring rapidly. When the Arabic gum dissolved 7g of polydextrose (LITESSE II 104578-V-4W2901 from Phizer/Danisco), 3 g inuline (Raftilose from ORAFTI), 6.99 g sodium hydrogen phosphate, and 0.033 g calcium chloride (ACS reagent grade) was added, the pH was adjusted to about 3.2 using 2M citric acid.

### Operating Procedure :

30 g of solution A and 70 g of solution B were added to 63 g cocoa butter (Callebaut CB), 30 g polyglyceryl ester as cocoa butter hardener (BELCO 12579A8) and 7 g GPR (Grindsted PGPR 90 Pfizer/Danisco).

Thereto, the two solutions were heated up to 80°C in separate containers with loose fitting lids and agitated by magnetic stirrer. After mixing of solutions A and B for 5 minutes the temperature is dropped to 45 - 50°C and a gel is obtained, which is of an acceptable consistency for injection into the cocoa butter continuous phase that has been heated to 400 °C. The temperature of the solutions is maintained at 80°C during injection, at an injection rate of 1.5ml per min per 1 cm of membrane tube length was used.

For injection, an electronically induced vibrator was used as test rig, which moved the injection tube with diameter 10-14mm with slotted 5µm pores, in a linear direction, creating shear at the surface of the membrane,

A W/O emulsion was obtained of 50 %water droplets, the remainder being the continuous phase, wherein the droplets had an average size 3 µm and a size distribution between 1-5µm with less than 2% between 5 and 10µm. Its caloric content was 4.8kcal/g.

### Comparitive example I

An attempt was made to create the W/O emulsion using a mixer alone from the same materials. All steps in example 1 are repeated, except for the use of a membrane filter to incorporate the aqueous phase into the chocholate. In this case droplets of 50µm in diameter appeared and in the final sample very large drops developed, since non-Newtonion rheology hinders the break-up of the larger drops. In industrially scaled reactors it is expected that the drop size will be even worse.

## Claims

1. A reduced calorie cocoa butter composition, being a w/o emulsion containing an aqueous dispersion of solidified droplets containing a hydrophilic colloidal stabilizer in a continuous phase containing cocoa butter.

2. The reduced calorie cocoa butter composition according to claim 1, being a monodisperse emulsion wherein at least 95 vol% of said droplets have a size within a range of 0.5 - 15 µm, preferably 0.5 - 5 µm.

3. The reduced calorie cocoa butter composition according to claim 1 or 2, wherein said hydrophilic colloidal stabilizer is pectin.

4. The reduced calorie cocoa butter composition according to any one of the preceding claims, wherein said droplets further fat-mimicking carbohydrates.

5. The reduced calorie cocoa butter composition according to claim 4, wherein said fat-mimicking carbohydrates are polydextrose and/or inulin.

6. The reduced calorie cocoa butter composition according to any one of the preceding claims, wherein the volume ratio of said continuous phase to said aqueous dispersion is between 3:1 and 1:2.

7. A process for preparing the reduced calorie cocoa butter composition by (i) providing cocoa butter at a temperature above its softening point, (ii) adding thereto, using encapsulation, an aqueous composition containing a hydrophilic colloidal stabilizer at a temperature of at least the softening temperature of the cocoa butter or the gelling temperature of the hydrophilic colloidal stabilizer, whichever is higher, to obtain a w/o emulsion in which the continuous phase contains cocoa butter, and (iii) solidifying the dispersed aqueous phase therein.

8. The process according to claim 7, wherein said encapsulation involves membrane emulsification.

9. The process according to claim 8, wherein said membrane emulsification involves the use of a metal microporous membrane

10. The process according to claim 9, wherein said metal microporous membrane has a mean pore size between 0.05 and 0.5 µm.

11. The process according to any one of claims 7-10, wherein said hydrophilic colloidal stabilizer is completely dissolved in the aqueous composition prior to adding said aqueous composition to said cocoa butter.

12. A chocolate food product containing the reduced calorie cocoa butter composition according to any one of claims 1 - 6 or prepared by the process according to any one of claims 7-11.

13. Use of microfiltration emulsification in reduced calorie chocolate manufacture.
